# EUROPÄISCHE PATENTSCHRIFT

(11) **EP 1 771 653 B1**
(45) Veröffentlichungstag und Bekanntmachung des Hinweises auf die Patenterteilung: **19.12.2007**
(21) Anmeldenummer: 05769882.1
(22) Anmeldetag: 26.07.2005
(51) Int. Cl.: F02M 55/02, F16K 15/02, F16K 15/06

(54) **VENTIL FÜR DEN EINSATZ IN EINER KRAFTSTOFFFÜHRENDEN LEITUNG EINES KRAFTFAHRZEUGES**
VALVE FOR USE IN A FUEL LINE OF A MOTOR VEHICLE
SOUPAPE DESTINEE A ETRE UTILISEE DANS UNE CANALISATION DE CARBURANT D'UN VEHICULE AUTOMOBILE

(30) Priorität: 30.07.2004 DE 102004037419
(43) Veröffentlichungstag der Anmeldung: 11.04.2007
(73) Patentinhaber: Siemens VDO Automotive AG, 93055 Regensburg (DE)
(72) Erfinder: DICKENSCHEID, Lothar, 55437 Ockenheim (DE); MÖHRING, Dirk, 65824 Schwalbach (DE)
(86) Internationale Anmeldenummer: PCT/EP2005/053640
(87) Internationale Veröffentlichungsnummer: WO 2006/013176

(56) Entgegenhaltungen:
- DE-A1- 19 900 883
- DE-C1- 19 752 963
- DE-U1- 9 101 313

## Beschreibung

Gegenstand der Erfindung ist ein Ventil für den Einsatz in einer kraftstoffführenden Leitung eines Kraftfahrzeugs mit einem Dichtsitz, einem den Dichtsitz verschließenden Ventilkörper und einer Federvorrichtung, welche den Ventilkörper gegen den Dichtsitz vorspannt, wobei der Ventilkörper auf seiner dem Dichtsitz zugewandten Seite eine Kontur zur Umlenkung des Volumenstroms über einen Winkel von größer 90° besitzt und dass der Außendurchmesser der Kontur größer als der Durchmesser des Dichtsitzes ist. Solche Ventile sind im Einsatz in Kraftstoffleitungen als Rückschlagventil oder Druckbegrenzungsventil.

Derartige Ventile sind seit langem bekannter Stand der Technik (DE 197 52 963 A1). Das Ventil ist oftmals in einem Gehäuse angeordnet, welches einen Einlass und einen Auslass besitzt. Der Einlass weist einen Dichtsitz auf, auf dem der von der Federvorrichtung vorgespannte Ventilköper aufsitzt und den Einlass dadurch verschließt. Der durch den Einlass strömende Kraftstoff wird somit am Weiterströmen gehindert. Erst wenn der Druck im Einlass die von der Federeinrichtung erzeugte Kraft übersteigt, wird der Ventilkörper vom Dichtsitz wegbewegt. Über den nunmehr geöffneten Einlass kann der Kraftstoff um den Ventilkörper herum zum Auslass strömen.

Als Ventilkörper werden vielfach scheibenförmige Bauteile verwendet. Zur Verbesserung der Umströmung des Ventilkörpers ist es weiterhin bekannt, Kugeln oder halbkugelförmige Bauteile als Ventilkörper zu verwenden. Während bei scheibenförmigen Ventilkörpern zur Umströmung des Ventilkörpers der Kraftstoffstrom um 90° umgelenkt wird, erfordern kugelförmige Ventilkörper eine Umlenkung des Kraftstoffstroms um einen Winkel von kleiner 90°. Infolge der Umlenkung auftretende Drosselverluste bewirken, dass diese Ventile eine steigende Kennlinie aufweisen. Das bedeutet, dass mit steigendem Volumenstrom der Druck ansteigt. Insbesondere bei einem als Druckbegrenzer eingesetztem Ventil in einer zu einer Brennkraftmaschine eines Kraftfahrzeugs führenden Vorlaufleitung ist dies ein erheblicher Nachteil, da der Druck in der Vorlaufleitung unabhängig vom Volumenstrom konstant sein soll. Die bekannten Ventile sind daher in Abhängigkeit von dem Anstieg der Kennlinie nur für einen begrenzten Volumenstrombereich einsetzbar.

Der Erfindung liegt daher die Aufgabe zugrunde, ein Ventil zu schaffen, welches bei verschiedenen Volumenströmen einen nahezu konstanten Druck in der Vorlaufleitung gewährleistet. Das Ventil soll darüber hinaus einfach aufgebaut und leicht zu montieren sein.

Erfindungsgemäß wird die Aufgabe dadurch gelöst, dass der Ventilkörper auf seiner dem Dichtsitz zugewandten Seite radial außen eine umlaufende Erhebung zum Umlenken der Strömung besitzt, und dass eine zentral angeordnete Erhebung in der von der umlaufenden Erhebung eingeschlossenen Fläche angeordnet ist.

Mit dieser Kontur leitet der Ventilkörper den Volumenstrom entgegengesetzt zu den Druckkräften, die auf den Ventilkörper wirken. Diese Strömungsumlenkung bewirkt, dass zusätzliche Impulskräfte auf den Ventilkörper einwirken. Als Folge dieser Strömungsumlenkung lassen sich Ventile mit besonders flachen Kennlinien realisieren. Das bedeutet, dass der Druck nahezu unabhängig vom Volumenstrom konstant bleibt. Ein weiterer wesentlicher Vorteil des Ventils besteht darin, dass das Ventil einfach aufgebaut ist und nicht mehr Teile als herkömmliche Ventile benötigt.

Die Kontur des Ventilkörpers ist vorteilhafterweise derart ausgebildet, dass die Umlenkung des Volumenstroms in einem Winkelbereich von 100° bis 170° erfolgt, wobei der Winkel auf die Achse des Ventilkörpers in Strömungsrichtung bezogen ist.

Für die Ausbildung einer besonders flachen Kennlinie des Ventils hat sich eine Kontur des Ventilkörpers erwiesen, welche den Volumenstrom in einem Winkelbereich von 120° bis 150° umlenkt.

Ein einfacher Aufbau des Ventils wird auch dadurch erreicht, dass die radial innen liegende Flanke der radial umlaufenden Erhebung als Dichtfläche ausgebildet ist, und mit dem Dichtsitz zusammenwirkt. Zusätzliche Dichtmittel sind somit nicht notwendig.

Es ist aber auch denkbar, zur besseren Abdichtung an der radial innen liegenden Flanke einen Bereich vorzusehen, der durch spezielle Formelemente dem am Einlass befindlichen Dichtsitz angepasst ist. Solche Formelemente können beispielsweise ein Absatz oder eine Dichtlippe sein. Aufgrund ihrer relativ geringen Abmessungen haben derartige Formelemente nahezu keinen störenden Einfluss auf den umgelenkten Volumenstrom.

Das Umlenken des Volumenstroms wird erleichtert, wenn die von der umlaufenden Erhebung eingeschlossene Fläche des Ventilkörpers konkav ausgebildet ist.

In einer weiteren vorteilhaften Ausbildung besitzt die Kontur des Ventilkörpers zwischen der zentral angeordneten Erhebung und der umlaufenden Erhebung einen kontinuierlichen Verlauf, wodurch eine besonders verwirbelungsarme und damit verlustfreie Umlenkung des Volumenstroms erreicht wird.

Aufgrund des einfachen Aufbaus lässt sich das Ventil problemlos in Leitungen integrieren. Die Ausbildung des Ventils mit einem Gehäuse ermöglicht darüber hinaus die Anordnung des Ventils an beliebigen Stellen.

In einer besonders einfachen Ausführung ist die Federvorrichtung eine Schraubenfeder. Aufgrund des relativ geringen Durchmessers von Schraubenfedern kann das Ventil ebenfalls mit einem geringen Durchmesser gestaltet werden.

Ein weiterer Vorteil besteht darin, dass die Schraubenfeder in Strömungsrichtung sowohl vor als auch nach dem Ventilkörper angeordnet werden kann. Die Anordnung der Schraubenfeder bezogen auf die Strömungsrichtung vor dem Ventilkörper hat dabei den Vorteil, dass diese Anordnung ein geringeres Schwingungsverhalten des Ventilkörpers aufweist.

In einer weiteren Ausgestaltung ist die Federvorrichtung als Tellerfeder ausgebildet. Seitliche Ausnehmungen in der Tellerfeder gewährleisten dabei den Durchtritt des Mediums. Ein derart gestaltetes Ventil benötigt in axialer Erstreckung besonders wenig Bauraum.

Ein Ventil mit einer geringen axialen Erstreckung wird in einer anderen Ausgestaltung dadurch erreicht, dass die Federvorrichtung eine Blattfeder ist. Die Befestigung der Blattfeder erfolgt vorteilhafterweise am Gehäuse.

Die Erfindung wird an mehreren Ausführungsbeispielen erläutert. Dabei zeigen
- Fig. 1: eine schematische Darstellung des erfindungsgemäßen Ventils im Schnitt,
- Fig. 2: ein Beispiel eines nicht erfindungsgemäßen Ventils,
- Fig. 3, 4: weitere Ausgestaltungen des Ventils mit verschiedenen Federvorrichtungen und Gehäuseausbildungen,
- Fig. 5: eine Ausgestaltung eines nicht erfindundsgemäßen Ventils mit einer Blattfeder und
- Fig. 6: eine vergrößerte Darstellung des Ventilkörpers und des Dichtsitzes.

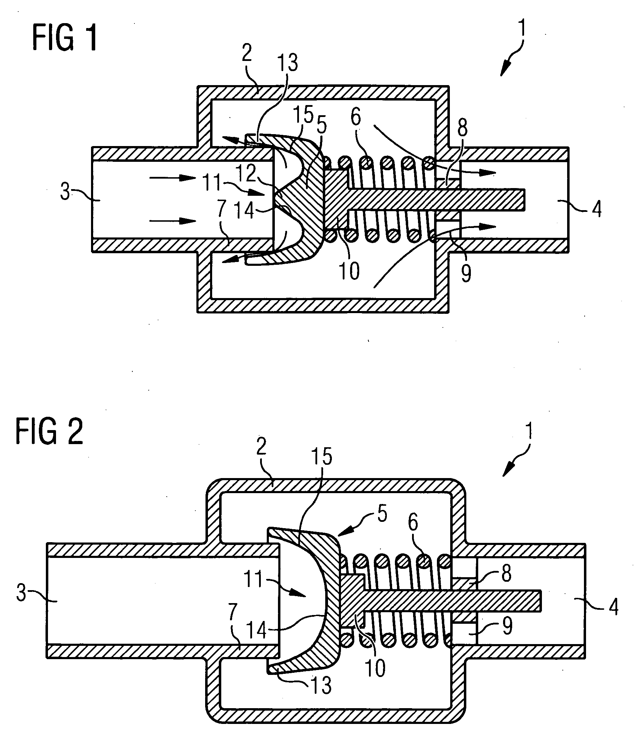

Das in Fig. 1 dargestellte Ventil wird als Rückschlagventil in einer Kraftstoffleitung eingesetzt. Das Ventil 1 besitzt ein Gehäuse 2, welches an seinen beiden Stirnseiten einen Einlass 3 und einen Auslass 4 aufweist, wobei der Einlass 3 in das Gehäuse 2 hineinragt. Der Einlass 3 und der Einlass 4 sind mit nicht dargestellten Leitungsenden der Kraftstoffleitung verbindbar. Der Einlass 3 wird von einem Ventilkörper 5 verschlossen, der von einer Schraubenfeder 6 gegen einen Dichtsitz 7 am Einlass 3 gepresst wird. Der Ventilkörper 5 besitzt hierzu auf der dem Dichtsitz abgewandten Seite eine Aufnahme 10 für die Schraubenfeder 6. An ihrem dem Ventilkörper 5 abgewandten Ende stützt sich die Schraubenfeder 6 an einem Steg 8 ab, der mit Durchbrüchen 9 zum Durchlass des Kraftstoffs versehen ist.

Auf der dem Dichtsitz 7 zugewandten Seite weist der Ventilkörper 5 eine Kontur 11 auf, die von einer mittig angeordneten zentralen Erhebung 12 und einer radial außen angeordneten umlaufenden Erhebung 13 gebildet wird. Beide Erhebungen 12, 13 sind mittels einer konkav ausgebildeten Fläche 14 derart miteinander verbunden, dass die Kontur 11 keinerlei Absätze aufweist. Der Außendurchmesser des Ventilkörpers 5 ist dabei größer als der Außendurchmesser des Einlasses 3, so dass die umlaufende Erhebung 13 im geschlossenen Zustand des Ventils 1 den Einlass 3 umgreift. Die innere Flanke 15 der umlaufenden Erhebung 13 ist dabei als Dichtfläche ausgebildet, die am Dichtsitz 7 des Einlasses 3 anliegt.

Sofern am Einlass 3 der Kraftstoff mit einem größeren Druck als die von der Schraubenfeder 6 erzeugte Kraft anliegt, wird der Ventilkörper 5 in Strömungsrichtung bewegt. Der einströmende Kraftstoff trifft auf die zentrale Erhebung 12, durch die er radial nach außen geleitet wird. Die konkav ausgebildete Fläche 14 leitet anschließend den Kraftstoffstrom in Richtung der umlaufenden Erhebung 13, wodurch der Kraftstoff bezogen auf die Strömungsrichtung in einem Winkel von größer 90° umgelenkt wird. In der gezeigten Darstellung wird der Kraftstoffstrom in einem Winkel von ca. 150° umgelenkt. Infolge der Umlenkung wirken nach dem Rückstossprinzip Impulskräfte auf den Ventilkörper 5. Anschließend durchströmt der Kraftstoff das Gehäuse 2. Über die Durchbrüche 9 im Steg 8 strömt der Kraftstoff weiter zum Auslass 4. Der Verlauf der Strömung ist mittels Pfeilen dargestellt. Dieses Ventil besitzt bis zu einem Volumenstrom von 300 l/h einen nahezu konstanten Druck. Ab einem Volumenstroms von 300 l/h bis zu 500 l/h steigt der Druck annähernd linear um ca. 0,06 bar. Damit weist das Ventil 1 bis zu einem Volumenstrom von 300 l/h eine waagerechte Kennlinie auf. Erst bei größeren Durchflüssen ist ein Anstieg der Kennlinie zu verzeichnen, wobei der Anstieg immer noch sehr flach ist.

Das in Fig. 2 gezeigt Ventil 1 entspricht im Wesentlichen dem Aufbau des Ventils 1 in Fig. 1. Lediglich die Kontur 11 des Ventilkörpers 5 unterscheidet sich dahingehend, dass anstelle der zentralen Erhebung die konkav ausgebildete Fläche 14 angeordnet ist.

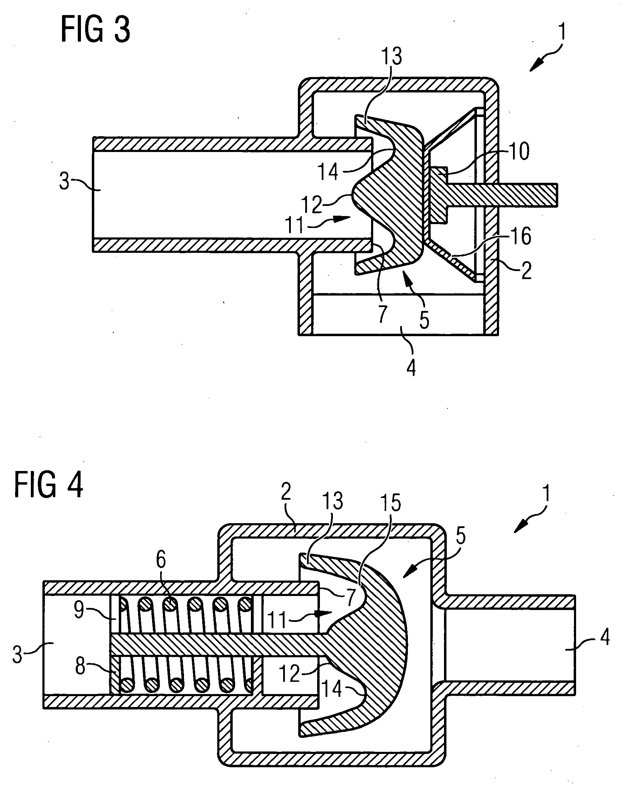

Das Ventil 1 nach Fig. 3 besitzt ein Gehäuse 2 mit einem radialen Auslass 4. der Ventilkörper 5 ist in einer Wand des Gehäuses 2 gelagert, an der sich auch die Feder 16 abstützt, die als Tellerfeder ausgebildet ist. Bei dieser Ausgestaltung ist kein Steg mit Durchbrüchen für den durchströmenden Kraftstoff notwendig. Bedingt durch den radialen Auslass 4 und der Verwendung der Tellerfeder 16 benötigt das Ventil 1 in axialer Erstreckung besonders wenig Bauraum. Darüber hinaus gestalten sich Montage und Herstellung besonders einfach.

Das Ventil 1 nach Fig. 4 unterscheidet sich von dem Ventil gemäß Fig. 1 lediglich dadurch, dass die Schraubenfeder 6 in Strömungsrichtung gesehen vor dem Ventilkörper 5 angeordnet ist.

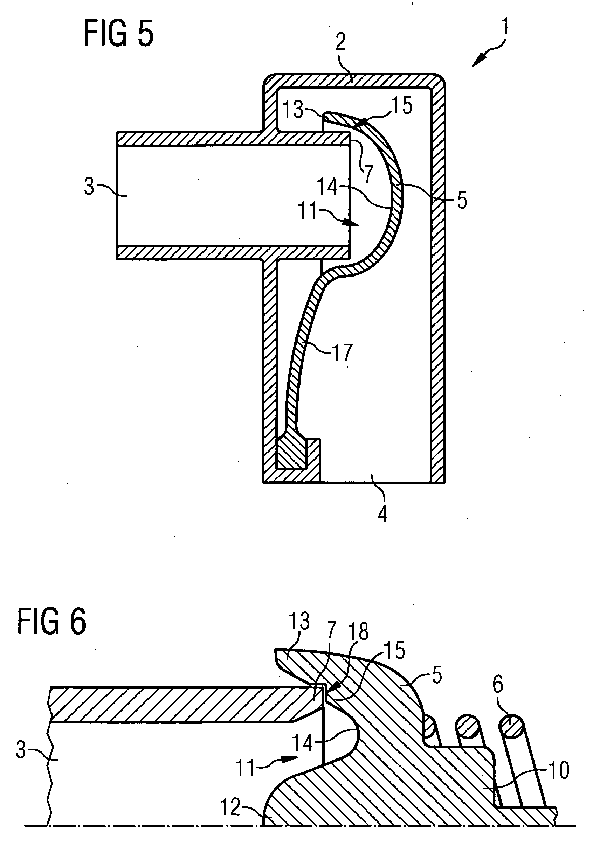

Das in Fig. 5 gezeigte Ventil 1 besitzt eine als Blattfeder 17 ausgebildete Federvorrichtung, wobei die Blattfeder 17 und der Ventilkörper 5 einteilig ausgebildet sind. Die Montage der Blattfeder 17 gestaltet sich durch die Befestigung am Gehäuse 2 besonders einfach.

Der Ventilkörper 5 in Fig. 6 dichtet im Bereich der inneren Flanke 15 der umlaufenden Erhebung 13 gegen den Dichtsitz 7 am Einlass 3 ab. Dazu weist die innere Flanke einen an den Dichtsitz 7 angepassten Bereich in Form eines Absatzes auf, der aufgrund seiner Formgestaltung eine zuverlässige Abdichtung gewährleistet.

## Patentansprüche

1. Ventil (1)für den Einsatz in einer kraftstoffführenden Leitung eines Kraftfahrzeugs mit einem Dichtsitz (7), einem den Dichtsitz (7) verschließenden Ventilkörper (5) und einer Federvorrichtung (6, 17), welche den Ventilkörper (5) gegen den Dichtsitz vorspannt, wobei der Ventilkörper (5) auf seiner dem Dichtsitz (7) zugewandten Seite eine Kontur (11) zur Umlenkung des Volumenstroms über einen Winkel von größer 90° besitzt und das der Außendurchmesser der Kontur (11) größer als der Durchmesser des Dichtsitzes (7) ist, **dadurch gekennzeichnet, dass** der Ventilkörper (5) auf seiner dem Dichtsitz (7) zugewandten Seite radial außen eine umlaufende Erhebung (13) zum Umlenken der Strömung besitzt, und dass die von der umlaufenden Erhebung (13) eingeschlossene Fläche (14) eine zentral angeordnete Erhebung (12) aufweist.

2. Ventil nach Anspruch 1, **dadurch gekennzeichnet, dass** die Kontur (11) des Ventilkörpers (5) zur Umlenkung.der Strömung in einem Winkelbereich von 100° bis 170°, insbesondere zwischen 120° bis 150°, ausgebildet ist.

3. Ventil nach Anspruch 1 oder 2, **dadurch gekennzeichnet, dass** die radiale innen liegende Flanke (15) der radial umlaufenden Erhebung (13) als Dichtfläche zum Zusammenwirken mit dem Dichtsitz (7) ausgebildet ist.

4. Ventil nach Anspruch 3, **dadurch gekennzeichnet, dass** die radiale innen liegende Flanke (15) der radial umlaufenden Erhebung (13) einen Bereich (18) besitzt, der an die Form des Dichtsitzes (7) angepasst ist.

5. Ventil nach zumindest einem der vorhergehenden Ansprüche, **dadurch gekennzeichnet, dass** die von der umlaufenden Erhebung (13) eingeschlossene Fläche (14) des Ventilkörpers (5) konkav ausgebildet ist.

6. Ventil nach Anspruch zumindest einem der vorhergehenden Ansprüche, **dadurch gekennzeichnet, dass** die Kontur (11) zwischen der umlaufenden Erhebung (13) und der zentral angeordneten Erhebung (12) einen kontinuierlichen Verlauf aufweist.

7. Ventil nach zumindest einem der vorhergehenden Ansprüche, **dadurch gekennzeichnet, dass** das Ventil (1) in einem Gehäuse (2) angeordnet ist.

8. Ventil nach zumindest einem der vorhergehenden Ansprüche, **dadurch gekennzeichnet, dass** die Federvorrichtung eine Schraubenfeder (6) ist.

9. Ventil nach zumindest einem der vorhergehenden Ansprüche, **dadurch gekennzeichnet, dass** die Schraubenfeder (6) in Strömungsrichtung nach dem Ventilkörper (5) angeordnet ist.

10. Ventil nach zumindest einem der vorhergehenden Ansprüche 1 bis 10, **dadurch gekennzeichnet, dass** die Schraubenfeder (6) in Strömungsrichtung vor dem Ventilkörper (5) angeordnet ist.

11. Ventil nach zumindest einem der vorhergehenden Ansprüche 1 bis 9, **dadurch gekennzeichnet, dass** die Federvorrichtung eine Tellerfeder (16) ist.

12. Ventil nach zumindest einem der vorhergehenden Ansprüche 1 bis 9, **dadurch gekennzeichnet, dass** die Federvorrichtung eine Blattfeder (17) ist.

13. Ventil nach Anspruch 12, **dadurch gekennzeichnet, dass** die Blattfeder (17) am Gehäuse (2) befestigt ist.

14. Ventil nach Anspruch 12, **dadurch gekennzeichnet, dass** die Blattfeder (17) und der Ventilkörper (5) einteilig ausgebildet sind.

## Claims

1. Valve (1) for use in a fuel line of a motor vehicle, comprising a sealing seat (7), a valve body (5) which closes the sealing seat (7), and a spring device (16, 17), which pretensions the valve body (5) against the sealing seat, the valve body (5), on its side facing the sealing seat (7), having a contour (11) for deflecting the volume flow by an angle of more than 90°, and the outside diameter of the contour (11) being greater than the diameter of the sealing seat (7), **characterized in that** on its side facing the sealing seat (7) the valve body (5) has a radially outer peripheral elevation (13) for deflecting the flow, and **in that** the face (14) enclosed by the peripheral elevation (13) has a centrally arranged elevation (12).

2. Valve according to Claim 1, **characterized in that** the contour (11) of the valve body (5) is designed to deflect the flow within an angular range of 100° to 170°, in particular between 120° and 150°.

3. Valve according to Claim 1 or 2, **characterized in that** the radially inner flank (15) of the radially peripheral elevation (13) takes the form of a sealing face for interaction with the sealing seat (7).

4. Valve according to Claim 3, **characterized in that** the radially inner flank (15) of the radially peripheral elevation (13) has an area (18) which conforms to the shape of the sealing seat (7).

5. Valve according to at least one of the preceding claims, **characterized in that** the face (14) of the valve body (5) enclosed by the peripheral elevation (13) is of concave design.

6. Valve according to at least one of the preceding claims, **characterized in that** the contour (11) between the peripheral elevation (13) and the centrally arranged elevation (12) has a continuous profile.

7. Valve according to at least one of the preceding claims, **characterized in that** the valve (1) is arranged in a housing (2).

8. Valve according to at least one of the preceding claims, **characterized in that** the spring device is a helical coil spring (6).

9. Valve according to at least one of the preceding claims, **characterized in that** the helical coil spring (6) is arranged downstream of the valve body (5) in the direction of flow.

10. Valve according to at least one of the preceding Claims 1 to 10, **characterized in that** the helical coil spring (6) is arranged upstream of the valve body (5) in the direction of flow.

11. Valve according to at least one of the preceding Claims 1 to 9, **characterized in that** the spring device is a disk spring (16).

12. Valve according to at least one of the preceding Claims 1 to 9, **characterized in that** the spring device is a leaf spring (17).

13. Valve according to Claim 12, **characterized in that** the leaf spring (17) is fixed to the housing (2).

14. Valve according to Claim 12, **characterized in that** the leaf spring (17) and the valve body (5) are integrally formed.

## Revendications

1. Soupape (1) destinée à être utilisée dans une canalisation de carburant d'un véhicule automobile et comportant un siège d'étanchéité (7), un corps de soupape (5) obturant le siège d'étanchéité (7) et un dispositif à ressort (6, 17) appliquant le corps de soupape (5) avec une force de précontrainte contre le siège d'étanchéité, où le corps de soupape (5) a, sur son côté tourné vers le siège d'étanchéité (7), un contour (11) destiné à faire dévier le flux volumétrique d'un angle supérieur à 90° et où le diamètre extérieur du contour (11) est supérieur au diamètre du siège d'étanchéité (7), **caractérisée par le fait que** le corps de soupape (5) a, sur son côté tourné vers le siège d'étanchéité (7), un bossage circulaire (13) extérieur dans le sens radial destiné à faire dévier le flux et que la surface (14) entourée par le bossage circulaire (13) comporte un bossage (12) disposé au centre.

2. Soupape selon la revendication 1, **caractérisée par le fait que** le contour (11) du corps de soupape (5) est configuré pour faire dévier le flux d'un angle compris dans une plage de 100° à 170°, notamment de 120° à 150°.

3. Soupape selon la revendication 1 ou 2, **caractérisée par le fait que** le flanc radialement intérieur (15) du bossage (13) radialement circulaire est conçu comme surface d'étanchéité concourant avec le siège d'étanchéité (7).

4. Soupape selon la revendication 3, **caractérisée par le fait que** le flanc radialement intérieur (15) du bossage (13) radialement circulaire a une zone (18) adaptée à la forme du siège d'étanchéité (7).

5. Soupape selon au moins l'une des revendications précédentes, **caractérisée par le fait que** la surface (14) du corps de soupape (5) entourée par le bossage circulaire (13) est concave.

6. Soupape selon au moins l'une des revendications précédentes, **caractérisée par le fait que** le contour (11) comporte, entre le bossage circulaire (13) et le bossage central (12), un tracé continu.

7. Soupape selon au moins l'une des revendications précédentes, **caractérisée par le fait que** la soupape (1) est placée dans un boîtier (2).

8. Soupape selon au moins l'une des revendications précédentes, **caractérisée par le fait que** le dispositif à ressort est un ressort hélicoïdal (6).

9. Soupape selon au moins l'une des revendications précédentes, **caractérisée par le fait que** le ressort hélicoïdal (6) est placé derrière le corps de soupape (5) dans le sens du flux.

10. Soupape selon au moins l'une des revendications précédentes 1 à 9, **caractérisée par le fait que** le ressort hélicoïdal (6) est placé devant le corps de soupape (5) dans le sens du flux.

11. Soupape selon au moins l'une des revendications précédentes 1 à 9, **caractérisée par le fait que** le dispositif à ressort est un ressort à disque (16).

12. Soupape selon au moins l'une des revendications précédentes 1 à 9, **caractérisée par le fait que** le dispositif à ressort est un ressort à lame (17).

13. Soupape selon la revendication 12, **caractérisée par le fait que** le ressort à lame (17) est fixé au boîtier (2).

14. Soupape selon la revendication 12, **caractérisée par le fait que** le ressort à lame (17) et le corps de soupape (5) sont conçus en une pièce unique.
